# EUROPEAN PATENT SPECIFICATION

(11) **EP 4 105 108 B1**
(45) Date of publication and mention of the grant of the patent: **22.05.2024**
(21) Application number: 21179476.3
(22) Date of filing: 15.06.2021
(51) Int. Cl.: B62D 15/02, B60K 35/00

(54) **A METHOD AND SYSTEM FOR CONTROLLING A USER-INITIATED VEHICLE-OPERATION-COMMAND**
VERFAHREN UND SYSTEM ZUR STEUERUNG EINES BENUTZERINITIIERTEN FAHRZEUGBETRIEBSBEFEHLS
PROCÉDÉ ET SYSTÈME DE CONTRÔLE D'UNE COMMANDE DE FONCTIONNEMENT DE VÉHICULE INITIÉE PAR L'UTILISATEUR

(43) Date of publication of application: 21.12.2022
(73) Proprietor: Ford Global Technologies, LLC, Dearborn, MI 48126 (US)
(72) Inventor: Benmimoun, Ahmed, 52074 Aachen (DE); Ma, Chenhao, Canton, MI Michigan 48188 (US); Pak, Tony, Garden City, MI Michigan 48135 (US); Golgiri, Hamid, Livonia, MI Michigan 48154 (US)
(74) Representative: Markowitz, Markus

(56) References cited:
- EP-A2- 3 663 167
- WO-A1-2015/068032
- US-A1- 2019 047 584
- US-A1- 2020 290 640
- US-A1- 2020 290 648
- US-A1- 2021 026 347
- "Remote Park-Pilot: Ferngesteuertes Parken per Smartphone-App", , 13 July 2015 (2015-07-13), XP002804747, Retrieved from the Internet: URL:https://media.daimler.com/marsMediaSit e/de/instance/ko.xhtml?oid=9361355&relId=1 001&resultInfoTypeId=173 [retrieved on 2021-11-12] -& Daimler Global Media Site: "Remote Parking Pilot - Trailer (E-Klasse)", , 23 December 2015 (2015-12-23), XP055861197, Retrieved from the Internet: URL:https://media.daimler.com/marsMediaSit e/de/instance/video/Remote-Parking-Pilot.x html?oid=4505022&ls=L2RlL2luc3RhbmNlL2tvLn hodG1sP29pZD05MzYxMzU1JnJlbElkPTEwMDEmcmVz dWx0SW5mb1R5cGVJZD0xNzMmZnJvbU9pZD05MzYxMz U1JnZpZXdUeXBlPWdyaWQmc29ydERlZmluaXRpb249 UFVCTElTSEVEX0FULTImdGh1bWJTY2FsZUluZGV4PT Emcm93Q291

## Description

The present invention first relates to a method for controlling a user-initiated vehicle-operation-command during an autonomous driving or parking operation of the vehicle. The proposed method is accompanied by a system configured for performing the proposed method and a vehicle equipped with the proposed system.

The invention makes use from known autonomous driver-assistance systems (ADAS) as used for autonomously driving a vehicle. Such advanced driver-assistance systems in vehicles may include Valet Parking Assistance (VaPA) to provide fully automated steering and manoeuvring when parking, for example within a car park or parking structure. Such systems use automated vehicle controls such as GPS (Global Positioning System) or on-board sensors along with camera, lidar, radar proximity and ultrasonic sensors, to navigate, identify valid parking slots, and park the vehicle ("drop-off" manoeuvre). The vehicle is also able to autonomously drive the parked vehicle from a parking slot to a specified pickup location ("summon" manoeuvre) upon request by the user. Within a summon manoeuvre the vehicle drives along a specified route or distance. Consequently, the summon manoeuvre is an operation during which the vehicle drives (driving operation). The aforementioned "drop-off" manoeuvre more relates to a parking operation. Thus, in the present document the term "driving operation" is used synonymously with the term "drop-off manoeuvre" and the term "parking operation" is used" synonymously for the term "summon manoeuvre".

Autonomous driver-assistance systems (ADAS) require information about the area where they are applied to be mapped for the vehicle to plan a route for the drop-off and summon manoeuvre. This digital map of the area, for example a car park or parking structure, could be very simple and consist only of a description of the drivable sections, or more complex such as high-definition maps with additional attributes such as signs, lane widths and the like. In most cases the ADAS or VaPA has to consider an actual traffic situation in the area of use, for example the car park or parking structure.

Once an autonomous driving or parking operation is in progress, there are several situations where the user might want to stop the vehicle (e.g. forgot to take out something from the vehicle before dropping off the vehicle, change of plans after starting to summon manoeuvre, etc.). This intention to stop/cancel a driving/parking operation of the vehicle by the user is specified as user-initiated vehicle-operation-command in the following. However, it is undesired to allow the user to stop the vehicle during an automated manoeuvre as it could lead to inconvenience for other traffic participants (e.g. blocking traffic behind the vehicle, stopping in an intersection, etc.) without the user being aware of this because he is located at a different location. Additionally, a user-initiated cancellation- or stop command could - without an appropriate verification procedure - allow for misuse.

Controlling of autonomous parking operations is known from the "Remote Park Pilot" as provided by Mercedes-Benz. A parking operation can be controlled by an external user via smartphone. Thereby the user is situated in a distance of up to 3 meters with respect to the vehicle and the smartphone stands in Bluetooth connection with the vehicle. Using specific gestures on the smartphone display, the parking operation can be controlled. Other related art may be found in US 2020/290640 A and US 2019/047584 A.

It is an object of the invention to provide a method for controlling a vehicle-operation-command during an autonomous driving or parking operation of the vehicle that overcomes or at least mitigates the shortcomings of the prior art, or that at least provides a user with a convenient alternative.

It is a further object of the invention to provide a system and a vehicle that overcome or at least mitigate the shortcomings of the prior art, or that at least provide a user with a convenient alternative.

These objects are achieved by the method, system, and vehicle defined in the appended claims.

According to a first aspect of the invention, a method for controlling a user-initiated vehicle-operation-command is proposed, the user of the vehicle being located external to the vehicle during an autonomous driving or parking operation of the vehicle, wherein the vehicle-operation-command is a cancellation- or stop command of the autonomous driving or parking operation. The user-initiated vehicle-operation-command is verified based on a verification-criterion. The verification-criterion relates to a direction of movement of the user relative to the vehicle. For the verification-criterion a threshold value or threshold condition is pre-defined. The verification is performed by comparing a measured or otherwise determined value or condition relating to the verification-criterion with the threshold value or threshold condition. In case that the measured or otherwise determined value or condition relating to the verification-criterion exceeds the threshold value or threshold condition, the cancellation- or stop command of the autonomous driving or parking operation is denied, and in case that the measured or otherwise determined value or condition relating to the verification-criterion is lower than the threshold value or threshold condition, the cancellation- or stop command of the autonomous driving or parking operation is accepted.

As mentioned before, the verification is performed by comparing a measured or otherwise determined value or condition relating to the verification-criterion. The comparison can also be performed by comparing several measured or otherwise determined values or conditions. Measuring a "value" means to perform a measurement of any kind to determine a measurement value (which can e.g. be a value representing the distance between the user and the vehicle). However, besides measuring, a value can also otherwise be determined, e.g. by evaluating data (such as position or GPS data of the vehicle and the user). A movement direction of the user may also be understood as condition.

The verification is performed on suitable means for verification, e.g. a computer or a calculation unit (e.g. a microcontroller). The means for verification may be part of a control unit of the vehicle. The means for verification might also be located external to the vehicle, e.g. on a server. The server might then wirelessly be connected (signal- and data connection) to a control unit of the vehicle, e.g. by way of a mobile internet connection. The verification criteria can be pre-defined and updated from time to time. The verification criterion relates to a direction of movement of the user relative to the vehicle. A related threshold condition may be a direction of movement toward or away from the vehicle. The direction of movement, in particular the threshold condition, can also relate to a user crossing a path of the vehicle.

The "direction of movement" of the user relative to the vehicle may be simplified in terms of the user moving toward the vehicle or the user moving away from the vehicle. Also, a steady state movement (e.g. parallel) relative to the vehicle may be present. Additionally, a user-behaviour relating to an interception of a path of the vehicle might be understood as "direction of movement".

According to another aspect of the proposed method, the autonomous parking manoeuvre is a drop-off manoeuvre, or wherein the autonomous driving manoeuvre is a summon manoeuvre. As defined before, a "drop-off" manoeuvre relates to a parking operation. A "summon manoeuvre" relates to an operation, where the vehicle autonomously drives from a parking slot to a specified pickup location.

According to another aspect of the proposed method, the direction of movement between the user and the vehicle is determined based on permanently monitored position data of the user and the vehicle. By permanently monitoring the position of the user and the vehicle, a change in their relative position may be used to analyse if the user moves towards the vehicle (the distance between vehicle and user is reduced) or if the user moves away from the vehicle (the distance between vehicle and user is increased). Also, an interception of a vehicle path by the user can be determined by the mentioned procedure. Additionally, a potential movement of the vehicle also must be considered.

According to another aspect of the proposed method, the user-initiated vehicle-operation-command is wirelessly transmitted from an electronic handheld device, preferably a smartphone, to a control unit of the vehicle. The user may initiate the command via a smartphone application software (App), the App being configured to interact with the control unit of the vehicle. The electronic handheld device may be wirelessly connected with a communication unit of the vehicle (the communication unit itself being connected with the control unit) based on a short-range, mid-range or long-range wireless connection. The connection may be employed via any possible communication standard. A possible connection may be employed via Bluetooth or a mobile internet connection.

According to another aspect of the proposed method, the user-initiated vehicle-operation-command is wirelessly transmitted from a wireless key to a control unit of the vehicle. Most of today's modern vehicles can be opened and locked by way of wireless keys. Within an autonomous driving or parking operation a user might use such a key (e.g. by way of actuating the opening button) with the intention to open the car or stop the vehicle. The proposed method evaluates if the command (given by actuating the key) was intended or not intended by the user.

According to another aspect of the proposed method, the user-initiated vehicle-operation-command relates to a movement sequence of the user indicating an intention of the user to cancel/stop the autonomous driving or parking operation, wherein the movement sequence is determined based on permanently monitored position data of the user and the vehicle or based on data detected with on-board sensors of the vehicle. For determining a movement sequence of the user, the position of the user must be tracked over a certain time interval. A movement sequence of the user can either be based on data being associated to a relative movement between the user and the vehicle or based on data being associated with a change of the position of the user (e.g. on a map).

According to another aspect of the proposed method, in case that the cancellation- or stop command of the autonomous driving or parking operation is accepted, the vehicle stops within a smooth braking procedure. An abrupt braking procedure could be associated with risks for the user or other traffic participants.

According to another aspect of the proposed method, in case that the cancellation- or stop command of the autonomous driving or parking operation is accepted, it is evaluated whether
- the vehicle is immediately stopped, or
- the vehicle is stopped at the next possible location.

The vehicle might be immediately stopped if the traffic or parking situation allows. If the traffic or parking situation does not allow an immediate stop, the stop is conducted at the next possible location (e.g. a free parking slot).

According to another aspect of the proposed method, after the vehicle is stopped, the vehicle waits for pre-defined time-period to enable vehicle access for the user, and wherein in case that the user does not enter the vehicle within said pre-defined time-period, the vehicle continues the autonomous driving or parking operation.

According to yet another aspect of the invention, there is provided a system configured for performing the proposed method, the system comprising
- a parking or driving unit configured to perform the autonomous driving or parking operation,
- a control unit positioned in vehicle, wherein the control unit is configured to
   a. receive or determine the user-initiated vehicle-operation-command,
   b. perform the verification,
wherein the parking or driving unit and the control unit are configured to interact with each other in terms of exchanging electronic signals and data.

The driving unit and the control unit may be part of an internal board control system of the vehicle. The driving unit and the control unit may be connected to a communication unit of the vehicle, the communication unit being configured to wirelessly transmit and receive data to external servers, mobile devices etc via the internet.

Additionally, the system may comprise a unit for receiving and/or determining an (actual) distance between the user and the vehicle. Said unit may be configured to determine the walking/driving direction of the user/the vehicle with respect to each other. Moreover, the system may comprise a unit for receiving and/or determining nearby courteous stopping locations of the vehicle.

It is to be emphasized, that the system may comprise dedicated units or means for performing any of the method steps described above.

According to another aspect of the invention, there is provided a vehicle equipped with said system, wherein the vehicle comprises a GPS system and/or at least one on-board sensor.

The invention will now be described in more detail with reference to the appended figures. In the figures:
- Fig. 1: shows the flow of the method according to a first embodiment not falling in the scope of the invention,
- Fig. 2: shows the flow of the method according to a second embodiment not falling in the scope of the invention,
- Fig. 3: shows the flow of the method according to a third embodiment not falling in the scope of the invention,
- Fig. 4: shows the flow of the method according to a fourth embodiment of the invention.

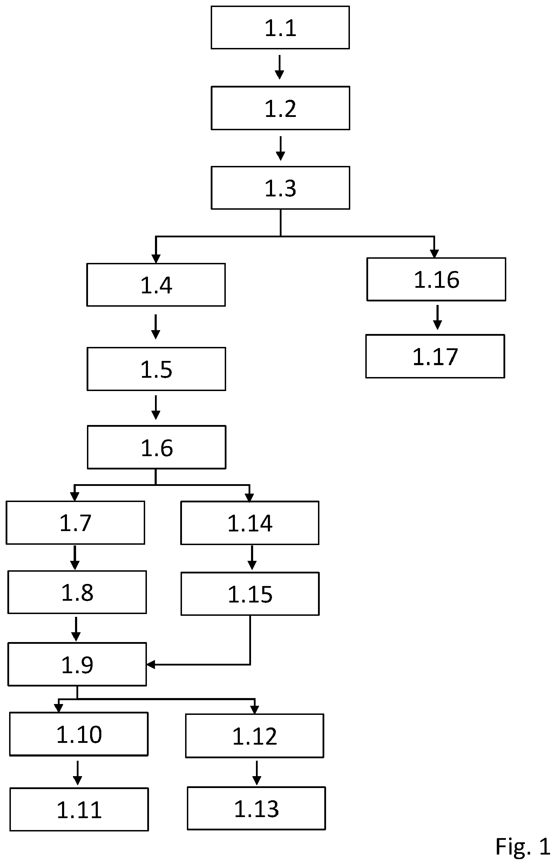

Turning to Figure 1, the flow chart describes the proposed method with respect to an example where the user requests a cancellation/stop (user-initiated vehicle-operation-command) of a drop-off manoeuvre via an electronic handheld device (e.g. a smartphone). A cancellation/stop is only possible when the user is close to the vehicle. The stopping position is calculated based on how fast the user can reach the vehicle. The distance between the user and the vehicle can be determined by using the GPS location of the electronic handheld device, key fob ranging, or other suitable methods. Also, on-board sensors might be used to determine the distance between user and vehicle. In a first step 1.1 the drop-off manoeuvre of the vehicle is started. In case that a user wants to cancel/stop the drop-off manoeuvre (step 1.2), in step 1.3 it is verified if the user is located within a specified distance relative to the vehicle. If the user is not located within the specified distance relative to the vehicle (step 1.16), the cancellation/stop option is not available to the user on the electronic handheld device (e.g. in an appropriate application software, App). Instead, an additional option is offered to the user, with which he can request the vehicle to return to the drop-off location, if desired. If the user is located within the specified distance from the vehicle (step 1.4), in a follow-up step 1.5 the cancellation/stop option is made available on the electronic handheld device (e.g. the App). The user can then initiate a cancelling/stop of the drop-off manoeuvre in the App. It is then (step 1.6) verified if the user is located very close (e.g. < 5 m) relative to the vehicle. If the user is not located very close to the vehicle (step 1.14), the vehicle stops at the next suitable location (not blocking other traffic) and informs the user about its location (e.g. via the App), step 1.15. If the user is located very close to the vehicle (step 1.7), the vehicle stops via a smooth braking procedure and continues to monitor the location of the user (step 1.8). It is verified if the user is moving away from the vehicle or if a certain time-period is passed without opening any door (step 1.9). Said step 1.9 can also be performed following step 1.15. In case that the user moves away from the vehicle or the time-period is passed (step 1.10), the vehicle continues the drop-off manoeuvre. The user is then informed on his electronic handheld device (step. 1.11). In case that the user does not move away from the vehicle or the time-period is not passed (step 1.12), the vehicle waits for the user to access the vehicle and then continues the drop-off manoeuvre after the user has finished his action and closed the doors (or the trunk), step. 1.13.

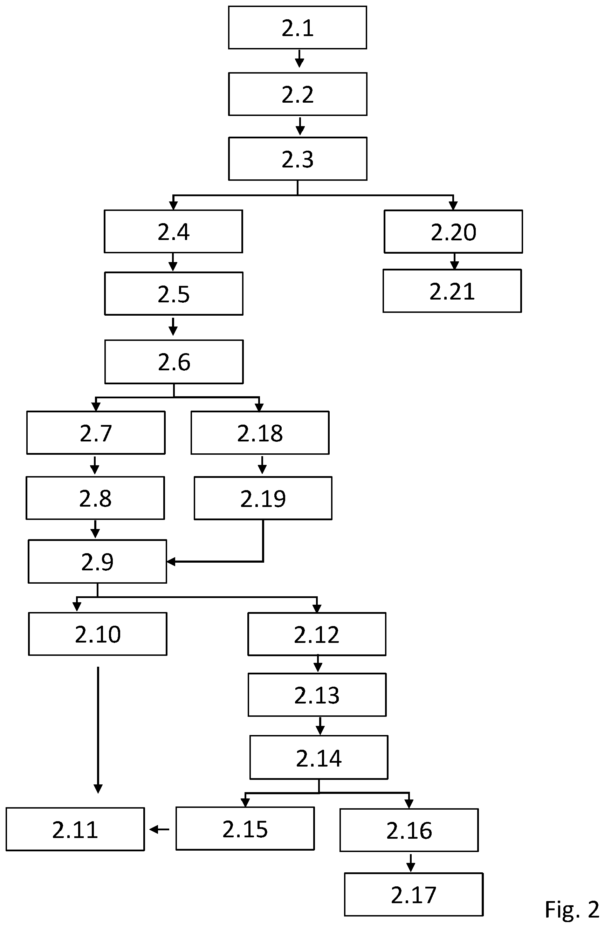

Turning to Figure 2, the flow chart describes the proposed method with respect to an example where the user requests a cancellation/stop (user-initiated vehicle-operation-command) of a summon manoeuvre via an electronic handheld device (e.g. a smartphone). A cancellation/stop of the manoeuvre is only possible when the user is close to the vehicle and the stopping position is based on how fast the user can reach the vehicle. Otherwise, the vehicle will cancel the summon manoeuvre and park in the next available parking slot. Here, the vehicle takes surrounding traffic into account and if the user acts according to his request (approaching the vehicle in a defined time). In a first step 2.1 the summon manoeuvre of the vehicle is started. In case that a user wants to cancel/stop the summon manoeuvre (step 2.2), in step 2.3 it is verified if the user is located within a specified distance (providing a first threshold value or threshold condition of the first verification-criterion) relative to the vehicle. If the user is not located within the specified distance relative to the vehicle (step 2.20), the cancellation/stop option is not available to the user on the electronic handheld device (e.g. in an appropriate application software, App). Instead, the user can request the vehicle to return to where it was previously parked or park itself at the next best parking slot, step 2.21. If the user is located within the specified distance from the vehicle (step 2.4), providing a first threshold value or threshold condition of the first verification-criterion, in a follow-up step 2.5 the cancellation/stop option is made available on the electronic handheld device (e.g. the App). The user can then initiate a cancelling/stop of the summon manoeuvre in the App. It is then (step 2.6) verified if the user is located very close (e.g. < 5 m) relative to the vehicle. If the user is not located very close to the vehicle (step 2.18), the vehicle stops at the next suitable location (not blocking other traffic) and informs the user about its location (e.g. via the App), step 2.19. If the user is located very close to the vehicle (step 2.7), the vehicle stops via a smooth braking procedure and continues to monitor the location of the user (step 2.8). It is verified if the user is moving away from the vehicle or if a certain time-period is passed without opening any door (step 2.9). Said step 2.9 can also be performed following step 2.19. In case that the user moves away from the vehicle or the time-period is passed (step 2.10), the vehicle cancels the summon manoeuvre and looks for the next empty spot and parks in that spot. The user is informed about this procedure and the vehicle's location, step 2.11. In case that the user does not move away from the vehicle or the time-period is not passed (step 2.12), the vehicle waits for the user to access the vehicle, step 2.13. It is then checked if the user enters the vehicle within a defined time-period, step 2.14. If the user enters the vehicle in the defined time-period (step 2.16), the autonomous operation of the vehicle is terminated. Control is handed over to the user after authentication, step 2.17. If the user does not enter the vehicle within the defined time-period (step 2.15), the method proceeds with step 2.11.

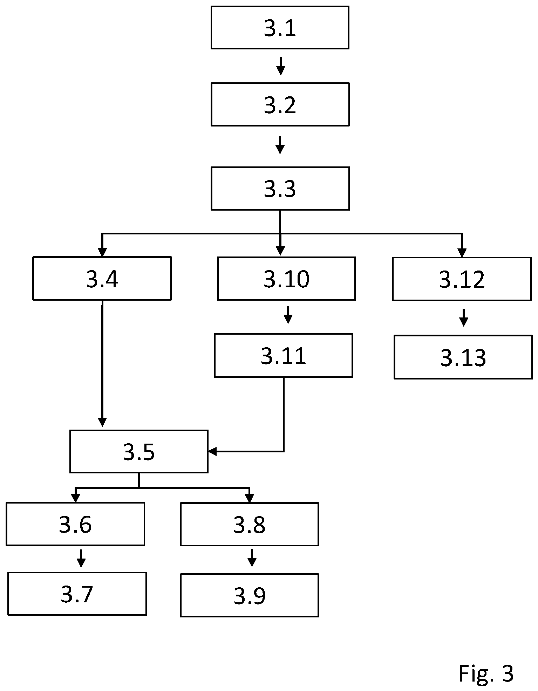

Turning to Figure 3, the flow chart describes the proposed method with respect to an example where the user might try to stop the vehicle during an ongoing autonomous parking/driving operation without a cancellation/stop request via an electronic handheld device. The user could unlock the door or open the trunk which procedure could be considered as an indication that the user might want to cancel/stop the autonomous parking/driving operation/manoeuvre. However, this could also result from a user accidentally pressing the unlock/trunk open button on the key. To minimize the user accidentally cancelling/stopping the autonomous parking/driving operation/manoeuvre which could cause inconvenience to other traffic participants, the system continuously monitors the user behaviour and location and identifies if the user has the intention to approach the vehicle to take over. It is also verified whether the user can reach the vehicle on time to prevent blocking traffic participants. After starting an autonomous parking/driving manoeuvre (step 3.1), and a user initiating a vehicle-operation-command by pressing an opening button of the key (step 3.2), the distance of the user to the vehicle is determined, step 3.3. In case that the user is located far away from the vehicle (e.g. not in line of sight), see step 3.12, the user command is ignored and classified as accidental. The vehicle continues the manoeuvre, step 3.13. In case that the user is in a close distance to the vehicle (e.g. < 25 m, being in line of sight), step 3.10, the vehicle stops at the next suitable location (not blocking other traffic participants) in step 3.11. In case that the user is in a very close distance to the vehicle (step. 3.4), e.g. < 5 m, the vehicle stops and waits for user's take over, step. 3.5. Said step 3.5 also follows to step 3.11. In step 3.6 a take over of the vehicle by the user is detected. In step 3.7 the autonomous parking/driving manoeuvre is terminated. In case that no take over of the vehicle by the user is detected in a specified time-period (step 3.8), the trunk/doors is/are locked and the vehicle resumes the autonomous manoeuvre, step 3.9.

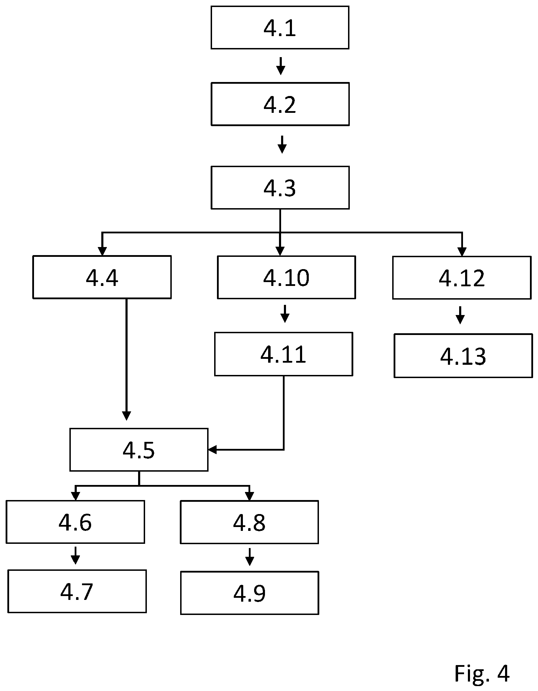

Turning to Figure 4, the flow chart describes the proposed method with respect to an example where the user intends to stop the vehicle and moves toward the vehicle (verification criterion). Within the method the location of the user relative to the vehicle can continuously be monitored. If the user is moving toward the vehicle or trying to intercept the vehicle (e.g. running behind the vehicle after drop-off) it can be determined if the user might want to approach the vehicle without cancellation/stop command through a remote device (e.g. electronic handheld device). If the user gets within a specified distance relative to the vehicle, the vehicle will stop. It is then checked if the user performs further actions (e.g. open the door, trunk etc.). If the user does not take further actions within a defined timeout period, or the user is getting further away from the vehicle, it will be assumed that the user does not want to cancel/stop the manoeuvre. The previous automatic manoeuvre is then resumed.

After starting an autonomous parking/driving manoeuvre (step 4.1), the position (location) of the user relative to the vehicle is monitored (step 4.2). Then (step 4.3) the direction of movement is determined (second verification criterion), specifically it is determined if the user is moving toward the vehicle/the path of the vehicle (e.g. running behind the vehicle or intercepting the vehicle). To sum up, the direction of movement (as relating to the second verification criterion) can be determined. In case that the user is located far away from the vehicle (e.g. not in line of sight), see step 4.12, the user command is ignored. The vehicle continues the manoeuvre, step 4.13. In case that the user is in a close distance to the vehicle (e.g. < 25 m), in which distance the user is in line of sight relative to the vehicle, see step 4.10, the vehicle stops at the next suitable location (not blocking other traffic participants) in step 4.11. In case that the user is in a very close distance to the vehicle (step. 4.4), e.g. < 5 m, the vehicle stops and waits for user's take over, step. 4.5. Alternatively, in step 4.5 instead of waiting for taking over the vehicle, the vehicle waits for further actions of the user (e.g. unlocking, grabbing door handle etc). Said step 4.5 also follows to step 4.11. In step 4.6 a taking over of the vehicle by the user is detected. In step 4.7 the autonomous parking/driving manoeuvre is terminated. In case that no taking over of the vehicle by the user is detected in a specified time-period, or the user is moving further away from the vehicle (step 4.8), the vehicle resumes the autonomous manoeuvre, step 4.9.

The description of embodiments of the invention is not intended to limit the scope of protection to these embodiments. The scope of protection is defined in the following claims.

## Claims

1. A method for controlling a user-initiated vehicle-operation-command, the user of the vehicle being located external to the vehicle during an autonomous driving or parking operation of the vehicle, wherein the vehicle-operation-command is a cancellation- or stop command of the autonomous driving or parking operation,
- wherein the user-initiated vehicle-operation-command is verified based on a verification-criterion,
- wherein for the verification-criterion a threshold value or threshold condition is pre-defined,
- wherein the verification is performed by comparing a measured or otherwise determined value or condition relating to the verification-criterion with the threshold value or threshold condition,
- and wherein in case that the measured or otherwise determined value or condition relating to the verification-criterion exceeds the threshold value or threshold condition, the cancellation- or stop command of the autonomous driving or parking operation is denied, and
in case that the measured or otherwise determined value or condition relating to the verification-criterion is lower than the threshold value or threshold condition, the cancellation- or stop command of the autonomous driving or parking operation is accepted
**characterized in that** the verification criterion relates to a direction of movement of the user relative to the vehicle.

2. Method according to claim 1, wherein the autonomous parking manoeuvre is a drop-off manoeuvre, or wherein the autonomous driving manoeuvre is a summon manoeuvre.

3. Method according to one of claims 1 or 2, wherein the direction of movement between the user and the vehicle is determined based on permanently monitored position data of the user and the vehicle.

4. Method according to one of the preceding claims, wherein the user-initiated vehicle-operation-command is wirelessly transmitted from an electronic handheld device, preferably a smartphone, to a control unit of the vehicle.

5. Method according to one of the preceding claims, wherein the user-initiated vehicle-operation-command is wirelessly transmitted from a wireless key to a control unit of the vehicle.

6. Method according to one of the preceding claims, wherein the user-initiated vehicle-operation-command relates to a movement sequence of the user indicating an intention of the user to cancel/stop the autonomous driving or parking operation, wherein the movement sequence is determined based on permanently monitored position data of the user and the vehicle or based on data detected with on-board sensors of the vehicle.

7. Method according to claim 1, wherein in case that the cancellation- or stop command of the autonomous driving or parking operation is accepted, the vehicle stops within a smooth braking procedure.

8. Method according to one of the preceding claims, wherein in case that the cancellation- or stop command of the autonomous driving or parking operation is accepted, it is evaluated whether
- the vehicle is immediately stopped, or
- the vehicle is stopped at the next possible location.

9. Method according to claim 8, wherein after the vehicle is stopped, the vehicle waits for pre-defined time-period to enable vehicle access for the user, and wherein in case that the user does not enter the vehicle within said pre-defined time-period, the vehicle continues the autonomous driving or parking operation.

10. A system configured for performing a method according to one of the preceding claims, the system comprising
- a parking or driving unit configured to perform the autonomous driving or parking operation,
- a control unit positioned in vehicle, wherein the control unit is configured to
a. receive or determine the user-initiated vehicle-operation-command,
b. perform the verification,
wherein the parking or driving unit and the control unit are configured to interact with each other in terms of exchanging electronic signals and data.

11. Vehicle equipped with a system according to claim 10, wherein the vehicle comprises a GPS system and/or at least one on-board sensor.

## Patentansprüche

1. Verfahren zum Steuern eines benutzerinitiierten Fahrzeugbetriebsbefehls, wobei sich der Benutzer des Fahrzeugs während eines autonomen Fahr- oder Parkbetriebs des Fahrzeugs außerhalb des Fahrzeugs befindet, wobei der Fahrzeugbetriebsbefehl ein Abbruch- oder ein Stoppbefehl des autonomen Farb- oder Parkbetriebs ist,
- wobei der benutzerinitiierte Fahrzeugbetriebsbefehl auf Basis eines Verifizierungskriteriums verifiziert wird,
- wobei für das Verifizierungskriterium ein Schwellwert oder eine Schwellwertbedingung vordefiniert ist,
- wobei die Verifizierung durch Vergleichen eines Wertes oder einer Bedingung, der bzw. die gemessen oder auf andere Weise bestimmt wird und das Verifizierungskriterium betrifft, mit dem Schwellwert oder der Schwellwertbedingung durchgeführt wird,
- und wobei in dem Fall, in dem der Wert oder die Bedingung, der bzw. die gemessen oder auf andere Weise bestimmt wurde und das Verifizierungskriterium betrifft, den Schwellwert oder die Schwellwertbedingung überschreitet, der Abbruch- oder Stoppbefehl des autonomen Fahr- oder Parkbetriebs zurückgewiesen wird, und in dem Fall, in dem der Wert oder die Bedingung, der bzw. die gemessen oder auf andere Weise bestimmt wurde und das Verifizierungskriterium betrifft, niedriger ist als der Schwellwert oder die Schwellwertbedingung, der Abbruch- oder Stoppbefehl des autonomen Fahr- oder Parkbetriebs akzeptiert wird
**dadurch gekennzeichnet, dass** das Verifizierungskriterium eine Bewegungsrichtung des Benutzers relativ zum Fahrzeug betrifft.

2. Verfahren nach Anspruch 1, wobei das autonome Parkmanöver ein Abstellmanöver ist oder wobei das autonome Fahrmanöver ein Abrufmanöver ist.

3. Verfahren nach einem der Ansprüche 1 oder 2, wobei die Bewegungsrichtung zwischen dem Benutzer und dem Fahrzeug auf Basis von permanent überwachten Positionsdaten des Benutzers und des Fahrzeugs bestimmt wird.

4. Verfahren nach einem der vorhergehenden Ansprüche, wobei der benutzerinitiierte Fahrzeugbetriebsbefehl von einer elektronischen Handvorrichtung, vorzugsweise einem Smartphone, drahtlos zu einer Steuereinheit des Fahrzeugs übertragen wird.

5. Verfahren nach einem der vorhergehenden Ansprüche, wobei der benutzerinitiierte Fahrzeugbetriebsbefehl von einem drahtlosen Schlüssel zu einer Steuereinheit des Fahrzeugs übertragen wird.

6. Verfahren nach einem der vorhergehenden Ansprüche, wobei der benutzerinitiierte Fahrzeugbetriebsbefehl eine Bewegungsfolge des Benutzers betrifft, die eine Absicht des Benutzers zum Abbrechen/Anhalten des autonomen Fahr- oder Parkbetriebs anzeigt, wobei die Bewegungsfolge auf Basis von permanent überwachten Positionsdaten des Benutzers und des Fahrzeugs oder auf Basis von durch fahrzeuginterne Sensoren detektierten Daten bestimmt wird.

7. Verfahren nach Anspruch 1, wobei in dem Fall, in dem der Abbruch- oder Stoppbefehl des autonomen Fahr- oder Parkbetriebs akzeptiert wird, das Fahrzeug mit einem sanften Bremsvorgang angehalten wird.

8. Verfahren nach einem der vorhergehenden Ansprüche, wobei in dem Fall, in dem der Abbruch- oder Stoppbefehl des autonomen Fahr- oder Parkbetriebs akzeptiert wird, beurteilt wird, ob
- das Fahrzeug sofort angehalten wird oder
- das Fahrzeug am nächsten möglichen Ort angehalten wird.

9. Verfahren nach Anspruch 8, wobei, nachdem das Fahrzeug angehalten wurde, das Fahrzeug für eine vordefinierte Zeitperiode wartet, um einen Fahrzeugzugang für den Benutzer zu ermöglichen, und wobei in dem Fall, in dem der Benutzer innerhalb der vordefinierten Zeitperiode nicht in das Fahrzeug einsteigt, das Fahrzeug den autonomen Fahr- oder Parkbetrieb fortsetzt.

10. System, das dazu ausgelegt ist, ein Verfahren nach einem der vorhergehenden Ansprüche durchzuführen, wobei das System Folgendes umfasst
- eine Park- oder Fahreinheit, die dazu ausgelegt ist, den autonomen Fahr- oder Parkbetrieb durchzuführen,
- eine im Fahrzeug positionierte Steuereinheit, wobei die Steuereinheit zu Folgendem ausgelegt ist
a. Empfangen oder Bestimmen des benutzerinitiierten Fahrzeugbetriebsbefehls,
b. Durchführen der Verifizierung,
wobei die Park- oder Fahreinheit und die Steuereinheit dazu ausgelegt sind, hinsichtlich des Austauschens von elektronischen Signalen und Daten miteinander zu interagieren.

11. Fahrzeug, das mit einem System nach Anspruch 10 ausgestattet ist, wobei das Fahrzeug ein GPS-System und/oder mindestens einen internen Sensor umfasst.

## Revendications

1. Procédé de contrôle d'une commande de fonctionnement de véhicule initiée par l'utilisateur, l'utilisateur du véhicule étant situé à l'extérieur du véhicule pendant une opération de conduite ou de stationnement autonome du véhicule, dans lequel la commande de fonctionnement de véhicule est une commande d'annulation ou d'arrêt de l'opération de conduite ou de stationnement autonome,
dans lequel la commande de fonctionnement de véhicule initiée par l'utilisateur est vérifiée sur la base d'un critère de vérification,
dans lequel, pour le critère de vérification, une valeur seuil ou une condition seuil est prédéfinie,
dans lequel la vérification est exécutée par comparaison d'une valeur ou d'une condition mesurée ou déterminée d'une autre façon par rapport au critère de vérification selon la valeur seuil ou la condition seuil,
et dans lequel au cas où la valeur ou la condition mesurée ou déterminée d'une autre façon par rapport au critère de vérification dépasse la valeur seuil ou la condition seuil, la commande d'annulation ou d'arrêt de l'opération de conduite ou de stationnement autonome est refusée, et au cas où la valeur ou la condition mesurée ou déterminée d'une autre façon par rapport au critère de vérification est inférieure à la valeur seuil ou à la condition seuil, la commande d'annulation ou d'arrêt de l'opération de conduite ou de stationnement autonome est acceptée,
**caractérisé en ce que** le critère de vérification concerne une direction de mouvement de l'utilisateur par rapport au véhicule.

2. Procédé selon la revendication 1, dans lequel la manoeuvre de stationnement autonome est une manoeuvre de déchargement, ou dans laquelle la manoeuvre de conduite autonome est une manoeuvre d'appel.

3. Procédé selon l'une des revendications 1 et 2, dans lequel la direction de mouvement entre l'utilisateur et le véhicule est déterminée sur la base de données de position surveillées en permanence de l'utilisateur et du véhicule.

4. Procédé selon l'une des revendications précédentes, dans lequel la commande de fonctionnement de véhicule initiée par l'utilisateur est transmise sans fil depuis un dispositif électronique portable, de préférence un smartphone, à une unité de commande du véhicule.

5. Procédé selon l'une des revendications précédentes, dans lequel la commande de fonctionnement de véhicule initiée par l'utilisateur est transmise sans fil depuis une clé sans fil à une unité de commande du véhicule.

6. Procédé selon l'une des revendications précédentes, dans lequel la commande de fonctionnement de véhicule initiée par l'utilisateur concerne une séquence de mouvements de l'utilisateur indiquant l'intention de l'utilisateur d'annuler/arrêter l'opération de conduite ou de stationnement autonome, dans lequel la séquence de mouvements est déterminée sur la base de données de position surveillées en permanence de l'utilisateur et du véhicule ou sur la base de données détectées au moyen de capteurs embarqués dans le véhicule.

7. Procédé selon la revendication 1, dans lequel au cas où la commande d'annulation ou d'arrêt de l'opération de conduite ou de stationnement autonome est acceptée, le véhicule s'arrête suivant une procédure de freinage fluide.

8. Procédé selon l'une des revendications précédentes, dans lequel au cas où la commande d'annulation ou d'arrêt de l'opération de conduite ou de stationnement autonome est acceptée, une évaluation est réalisée de si
le véhicule est arrêté immédiatement, ou
le véhicule est arrêté à l'emplacement possible suivant.

9. Procédé selon la revendication 8, dans lequel après que le véhicule est arrêté, le véhicule attend pendant une période prédéfinie pour permettre l'accès de l'utilisateur au véhicule, et dans lequel au cas où l'utilisateur n'entre pas dans le véhicule pendant ladite période prédéfinie, le véhicule poursuit l'opération de conduite ou de stationnement autonome.

10. Système configuré pour exécuter un procédé selon l'une quelconque des revendications précédentes, le système comprenant
une unité de stationnement ou de conduite configurée pour exécuter l'opération de conduite ou de stationnement autonome,
une unité de commande positionnée dans le véhicule, dans lequel l'unité de commande est configurée pour
a. recevoir ou déterminer la commande de fonctionnement de véhicule initiée par l'utilisateur,
b. exécuter la vérification,
dans lequel l'unité de stationnement ou de conduite et l'unité de commande sont configurées pour interagir l'une avec l'autre afin d'échanger des signaux et des données électroniques.

11. Véhicule équipé d'un système selon la revendication 10, dans lequel le véhicule comprend un système GPS et/ou au moins un capteur embarqué.
